# EUROPÄISCHE PATENTANMELDUNG

(11) **EP 3 486 480 A1**
(43) Veröffentlichungstag der Anmeldung: **22.05.2019**
(21) Anmeldenummer: 18207049.0
(22) Anmeldetag: 19.11.2018
(51) Int. Cl.: F03D 13/20, B66C 1/10, F03D 13/10

(54) **SPANNGURT AN WINDENERGIEANLAGEN**

(30) Priorität: 20.11.2017 DE 102017010712
(71) Anmelder: Senvion GmbH, 22297 Hamburg (DE)
(72) Erfinder: Kleinwort, Finn, 23730 Schashagen (DE); Neumann, Niklas, 22417 Hamburg (DE)
(74) Vertreter: Glawe, Delfs, Moll

(57) **Zusammenfassung**

Die Erfindung betrifft ein Befestigungsmittel für Anbauteile an Windenergieanlagen (1) wobei das Befestigungsmittel einen Zurrgurt (3) und eine Ratsche (4) umfasst, die eine Spanneinrichtung (5) für den Zurrgurt (3) umfasst, wobei am Zurrgurt (3) eine gesonderte Schnelltrenneinrichtung (6) vorgesehen ist, die unter Last öffenbar ist, und ferner ein Auslöser für die Schnelltrenneinrichtung (6) vorgesehen ist, der fernbedienbar ist.

## Beschreibung

Die Erfindung betrifft ein Befestigungsmittel für Anbauteile an Windenergieanlagen, insbesondere an Türmen von Windenergieanlagen, umfassend einen Zurrgurt und eine Ratsche mit Spanneinrichtung.

Beim Transport und zur Montage von Windenergieanlagen, insbesondere von deren Türmen, ist es oft erforderlich, Zurrgurte an den Türmen oder anderen Komponenten der Windenergieanlage anzuordnen. Mittels dieser Zurrgurte werden Anbauteile wie beispielsweise Absorber oder Scruton-Wendel außen umlaufend am Turm befestigt, um dem Turm eine größere Widerstandsfähigkeit gegenüber Windbelastung während des Transports bzw. Aufbauarbeiten zu verleihen. Derartige Wendel sind beispielsweise beschrieben in dem europäischen Patent EP 2 851 490 B1. Nach Abschluss der Arbeiten können die Anbauteile wieder entfernt werden, und dazu werden die Zurrgurte abgenommen. Die Zurrgurte sind nur temporär an der Komponente der Windenergieanlage angeordnet, d.h. sie müssen nicht nur gut spannbar sondern auch gut lösbar sein.

Die Montage der Zurrgurte erfolgt in der Regel am Verladeort, mithin also an Land unter Nutzung guter Infrastruktur. Das Anbringen und Betätigen der Zurrgurte ist dort wenig problematisch. Anders sieht dies häufig am konkreten Montageort der Windenergieanlage aus. Dort sind je nach Umgebung die Infrastrukturverhältnisse wesentlich ungünstiger, das gilt insbesondere für Offshore-Montagen. In der Praxis hat sich gezeigt, dass häufig das Lösen der Zurrgurte schwierig sein kann. Da insbesondere bei hohen Türmen der Zugang schwierig ist, ergibt sich so eine hohe Gefährdung für die Monteure.

Der Erfindung liegt die Aufgabe zugrunde, diesem Nachteil entgegenzuwirken durch Schaffung eines verbesserten Befestigungsmittels mit Zurrgurt.

Die erfindungsgemäße Lösung liegt in den Merkmalen des unabhängigen Anspruchs. Vorteilhafte Weiterbildungen sind Gegenstand der abhängigen Ansprüche.

Bei einem Befestigungsmittel für Anbauteile an Windenergieanlagen umfassend einen Zurrgurt und eine Ratsche, die eine Spanneinrichtung für den Zurrgurt umfasst, ist erfindungsgemäß am Zurrgurt eine gesonderte Schnelltrenneinrichtung vorgesehen, die unter Last öffenbar ist, wobei ferner ein Auslöser für die Schnelltrenneinrichtung vorgesehen ist, der fernbedienbar ist.

Unter einem Anbauteil wird ein temporär, insbesondere zum Transport oder zum Aufbau der Windenergieanlage, zu montierendes und danach wieder zu demontierendes Element verstanden. Beispiele hierfür sind Absorber oder Wendel, die temporär an der Außenseite eines Turms umlaufend angeordnet werden.

Der Erfindung liegt der Gedanke zugrunde, dass mittels der zusätzlich zu der Ratsche vorgesehenen gesonderten Schnelltrenneinrichtung eine Möglichkeit geschaffen wird, mittels der der Zurrgurt auch im gespannten Zustand leicht und aus der Ferne gelöst werden kann, ohne dass dazu Zugang zur Ratsche selbst bestehen muss. Diese ermöglicht eine Fernbedienung vom Boden (oder bei Offshore-Anwendungen: von der Plattform) aus, und zwar auch dann, wenn der Zurrgurt in größerer Höhe angeordnet ist. Der gefährliche Zugang zur Ratsche, die mitunter in beträchtlicher und damit absturzrelevanter Höhe angeordnet ist, kann damit vermieden werden. Somit erleichtert die Erfindung nicht nur die Handhabung, sondern sorgt zusätzlich für eine handfeste Risikoverringerung für die Monteure.

Mit Vorteil ist ein Ankopplungselement für ein Zugelement an der Schnelltrenneinrichtung vorgesehen. Damit kann der Auslöser durch Zug an dem Zugelement auf einfache Weise betätigt werden. Zweckmäßig ist es, das Zugelement als ein Hilfsseil auszuführen, welches vom Boden direkt betätigt werden kann, ohne dass dazu irgendein Klettern seitens des Monteurs erforderlich ist. Mit Vorteil ist das Ankopplungselement integral mit dem Zurrgurt ausgeführt, vorzugsweise als Schlaufe. Auf diese Weise ist es unverlierbar, was insbesondere bei rauen Einsatzbedingungen wie bei Offshore-Montagen ein erheblicher Vorteil ist.

Eine besonders zweckmäßige Ausführungsform der Schnelltrenneinrichtung ist die Ausführung als Klettverschluss. Diese ist vorzugsweise im Bereich des freien Endes des Zurrgurts angeordnet. Das freie Ende mit dem Klettverschluss wird durch eine am Gegenstück angeordnete Schnalle geführt, dabei richtungsmäßig umgelenkt, so dass es wieder auf sich selbst zu liegen kommt. Auf diese Weise kann eine einfache und dennoch sichere Befestigung erreicht werden. Weiter hat dies den Vorteil, dass die Klettverbindung im Grunde nur auf Schwerkraft belastet wird, d. h. keine die beiden Komponenten der Klettverbindung auseinanderziehende, in Normal-Richtung wirkende Kraft aufgebracht wird. Die Befestigung des Klettverschlusses wird dadurch auch unter hoher Last nicht negativ beeinträchtigt.

Weiter bietet diese Ausführung den Vorteil, dass sie problemlos über verhältnismäßig lange Strecken erfolgen kann, sodass dank dieser langen Strecke eine großflächige Verbindung mit entsprechend großer Verbindungssicherheit erreicht werden kann. Zweckmäßigerweise ist die Länge des Klettverschlusses so bemessen, dass sie sich über mindestens ein Sechstel der Länge des Zurrgurts erstreckt, vorzugsweise sogar bei mindestens ein Fünftel. Damit wird erreicht, dass bei dem häufigen Fall einer Verwendung an runden oder nahezu runden Gegenständen, wie dem Turm einer Windenergieanlage, der Klettverschluss der Schnelltrenneinrichtung sich über einen Winkelbereich von mindestens 60° erstreckt. Dies führt dazu, dass der beim Spannen des Zurrgurts entstehende Zugkraftvektor einen solchen Winkel zu dem Zurrgurt einnimmt, dass die beiden Komponenten des Klettverschlusses überwiegend aufeinandergedrückt werden, was zu einer weiteren Steigerung der Verbindungssicherheit führt. Beträgt die Länge des Klettverschlusses mindestens ein Fünftel, so wird ferner erreicht, dass der Klettverschluss sich am Turm über einen Umfangsbereich von nahezu 90° erstreckt, wodurch die von der Ratsche ausgeübte Spannkraft zu einer den Klettverschluss aufeinander pressenden Kraft wird. Damit wird eine weitere erhebliche Steigerung der Verbindungsicherheit erreicht. In der Praxis ist es so, dass der Klettverschluss damit auch bei höchster Last praktisch unauflöslich ist (außer durch absichtliche Betätigung der Schnelltrenneinrichtung bzw. der Ratsche). Die Befestigungssicherheit des erfindungsgemäßen Zurrgurts ist damit mindestens so groß wie diejenige eines herkömmlichen ohne zusätzliche Schnelltrenneinrichtung.

Bei einer zweckmäßigen Ausführungsform ist der Zurrgurt mehrteilig ausgeführt mit einer dazwischen liegenden Schnelltrenneinrichtung. Dadurch ist die Schnelltrenneinrichtung abgesetzt von der Ratsche. Dies bietet Handhabungsvorteile, da insbesondere nicht die Gefahr besteht, dass sich das Hilfsseil für die Betätigung der Schnelltrenneinrichtung in der Ratsche verhakt. Die Teile des Zurrgurts müssen dabei nicht unbedingt gleich lang sein: es kann genügen, wenn das kürzere Teil lediglich 5 % der Gesamtlänge des Zurrgurts hat. Bereits damit ist gewährleistet, dass ein unter praktischen Gesichtspunkten ausreichender Abstand von der Ratsche besteht. Es soll aber nicht ausgeschlossen sein, dass die Schnelltrenneinrichtung auch an der Ratsche angeordnet sein kann. Vorzugsweise ist sie gegenüberliegend von der Seite angeordnet, wo der Zurrgurt herkömmlicherweise in die Spanneinrichtung der Ratsche eintritt.

Es ist zweckmäßig, wenn eine Seite des Zurrgurts mit einer reibungserhöhenden, insbesondere haftreibungserhöhenden Beschichtung versehen ist. Die beschichtete Seite soll dabei die Seite des Zurrgurts sein, welche im gespannten Zustand nach innen weist. Denn sie liegt im gespannten Zustand auf dem umfassten Gegenstand, meist also der Außenseite des Windenergieanlagen-Turms, auf. Durch die reibungserhöhende Beschichtung wird zum einen ein sicherer Halt der Spanneinrichtung erreicht, auch in Bezug auf Kräfte, die quer zur Spannrichtung wirken. Es wird damit ferner verhindert, dass der Zurrgurt sich unter der auf das Hilfsseil wirkenden Betätigungskraft bewegen kann, wodurch eine zielgenaue Auslösung der Schnelltrenneinrichtung erreicht wird. Zum anderen kann dadurch ein wirksamer Schutz der Oberfläche vor Beschädigungen erreicht werden, wie sie durch einen rutschenden Zurrgurt entstehen könnten. Dies gilt insbesondere dann, wenn die reibungserhöhende Beschichtung als Gummierung ausgeführt ist.

Mit Vorteil weist der Zurrgurt mehrere Aufnahmeschlaufen auf, die insbesondere zur Aufnahme von Anbaubauteilen ausgeführt sind wie Streben, Absorber und/oder den Windenergieanlagen-Turm umfassende Wendeln. Somit können diese Anbauteile einfach und sicher durch Spannen des Zurrgurts positionstreu an dem Turm der Windenergieanlage montiert werden. So können beispielsweise Scruton-Wendel mit einer definierten Steigung verrutschsicher am Turm montiert werden, und erfindungsgemäß nach der Montage auf einfache Weise direkt wieder gelöst werden. Zweckmäßig ist es, wenn die Aufnahmeschlaufen in den Zurrgurt integriert sind, und zwar vorzugsweise in eine mehrlagige Struktur des Zurrgurts. Zum einen sind die Aufnahmeschlaufen damit unverlierbar, zum anderen sind sie kraftmäßig unmittelbar in die Struktur des Zurrgurts eingebunden. Schädliche Lastkonzentrationen am Verbindungsstück zwischen Zurrgurt und Aufnahmeschlaufen, wie sie bei externer Montage auftreten können, werden auf diese Weise wirksam verhindert.

Die Erfindung wird nachfolgend unter Bezugnahme auf die beigefügte Zeichnung näher erläutert, in der vorteilhafte Ausführungsbeispiele dargestellt sind. Es zeigen:
- Fig. 1: eine schematische Ansicht einer Windenergieanlage mit Befestigungsmitteln gemäß einem Ausführungsbeispiel der Erfindung;
- Fig. 2: eine Aufsicht auf das Befestigungsmittel im spannbereiten Zustand;
- Fig. 3: eine Detailaufsicht auf eine alternative Ausführungsform des Befestigungsmittels;
- Fig. 4A, B: perspektivische Ansichten eines zweiteiligen Zurrguts des Befestigungsmittels;

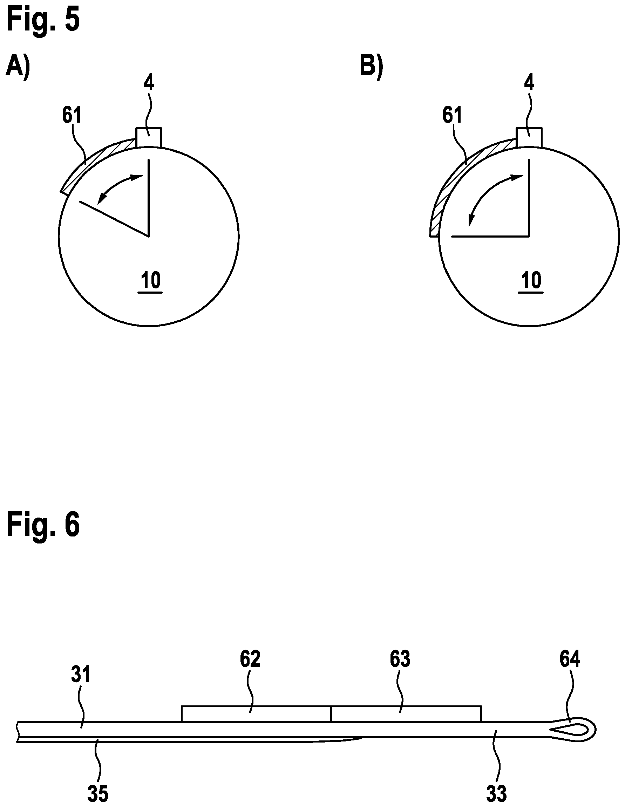

- Fig. 5A, B: Aufsichten auf einen Turm einer Windenergieanlage mit montiertem gespanntem Befestigungsmittel;
- Fig. 6: eine Schnittansicht eines Endbereichs des Zurrguts; und
- Fig. 7: eine Seitenansicht eines Windenergieanlagen-Turms mit mehreren mittels erfindungsgemäßer Befestigungsmittel befestigten Scruton-Wendeln.

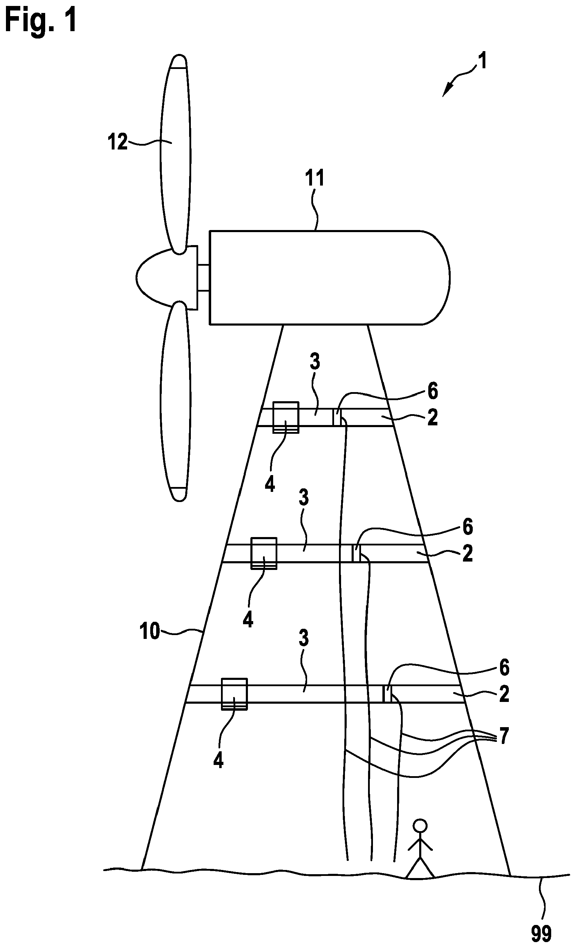

Eine in ihrer Gesamtheit mit der Bezugsziffer 1 bezeichnete Windenergieanlage weist einen Turm 10 mit einer schwenkbar an dessen oberem Ende angeordneten Gondel 11 auf. Sie weist an ihrer einen Stirnseite einen drehbar gelagerten Windrotor 12 auf, der einen in der Gondel 11 angeordneten Generator (nicht dargestellt) zur Erzeugung elektrischer Energie antreibt. Vorliegend sind bei der Darstellung gemäß Figur 1 mehrere Befestigungsmittel 2 in unterschiedlicher Höhe außen um den Turm 10 umlaufend gespannt. Jedes der Befestigungsmittel 2 umfasst einen Zurrgurt 3, eine Ratsche 4 und eine Schnelltrenneinrichtung 6. Die Zurrgurte 3 sind mittels der Ratsche 4 fest gespannt, sodass sie verrutschsicher auf dem Außenmantel des Turms 10 gehalten sind. An der Schnelltrenneinrichtung 6 der einzelnen Befestigungsmittel 2 ist erfindungsgemäß jeweils ein Hilfsseil 7 angeordnet, um bei Bedarf die Schnelltrenneinrichtung 6 zu betätigen.

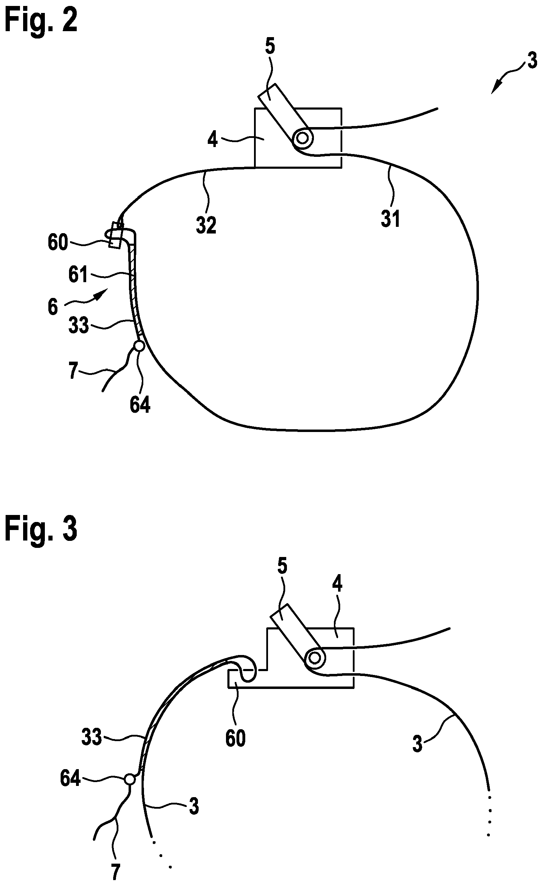

Der prinzipielle Aufbau eines Befestigungsmittels 2 ist in Fig. 2 näher dargestellt. Man erkennt den Grundaufbau mit einem Zurrgurt 3, der mit einem Ende an der Ratsche 4 befestigt ist und dessen anderes Ende durch die Ratsche 4 mit ihrer Spanneinrichtung 5 geführt ist. Die Ratsche 4 weist ferner eine Auslöseeinrichtung (nicht dargestellt) auf, mittels der die durch die Spanneinrichtung 6 aufgebrachte Spannung des Zurrgurts 3 gelöst werden kann. Durch Betätigen der Spanneinrichtung wird der Zurrgurt 3 gespannt, und bei Bedarf durch Betätigen der Auslöseeinrichtung an der Ratsche 4 wieder gelöst. Dies ist der herkömmliche Aufbau.

Erfindungsgemäß ist nun zusätzlich die Schnelltrenneinrichtung 6 vorgesehen. Sie umfasst in dem dargestellten Ausführungsbeispiel zum einen eine Schnalle 60, durch welche ein erster Teil 31 des Zurrgurts 3 mit einem freien Ende 33 geführt ist. Die Schnalle 60 ist über einen zweiten Teil 32 des Zurrgurts mit der Ratsche 4 verbunden. Das freie Ende 33 ist mit einem Klettverschluss 61 versehen. Dieses ist dazu ausgebildet, dass der durch die Schnalle 60 gesteckte Bereich des freien Endes 33 um 180° umgelenkt und so zurückgeführt ist, dass er außen auf der Oberseite (Außenseite des Zurrgurts 3) aufliegt. Wegen des in diesem Bereich angeordneten Klettverschlusses 61 ist somit das freie Ende fest auf dem unter ihm befindlichen Abschnitt des ersten Teils 31 des Zurrgurts 3 angeordnet. Es ergibt sich somit eine zugfeste Verbindung zwischen dem ersten Teil 31 des Zurrgurts 3 und der an dem zweiten Teil 32 angeordneten Schnalle 60. Auf diese Weise kann der Zurrgurt in herkömmlicher Weise verwendet werden, insbesondere kann er mittels der Spanneinrichtung 5 der Ratsche 4 gespannt werden. Die Schnelltrenneinrichtung 6 ist dank des Klettverschlusses 61 sicher im geschlossenen Zustand gehalten.

An der Spitze des freien Endes 33 ist eine als Auge ausgeführte Aufnahme 64 angeordnet. Sie dient zur Aufnahme eines als Hilfsseil 7 ausgeführten Zugelements. Dieses hängt im Ruhezustand schlaff herab.

Soll nach erfolgter Montage das Befestigungsmittel 2 vom Turm 10 gelöst werden, so kann zum einen auf herkömmliche Weise die Auslöseeinrichtung an der Ratsche 4 betätigt werden. Wegen der teilweise unzugänglichen Anordnung des Befestigungsmittels 2 in großer Höhe am Turm 10 ist dies häufig nicht praktikabel. Alternativ kann zum Lösen die Schnelltrenneinrichtung 5 geöffnet werden. Dazu ist erfindungsgemäß vorgesehen, dass mittels eines Zugs an dem Hilfsseil 7 eine abziehende Kraft über die Schlaufe 64 auf den äußeren Teil des freien Endes 33 ausgeübt wird, sodass dieses von dem am Turm 10 anliegenden ersten Teil 31 des Zurrgurts wegbewegt wird. Durch dieses Wegbewegen wird der Klettverschluss 61 gelöst, das freie Ende 33 kommt frei und kann sich durch die Schnalle 60 zurückbewegen. Auf diese Weise wird das Befestigungsmittel 2 entspannt, und es kann leicht abgenommen werden. Ein physischer Zugang zu der Ratsche 4 ist dabei nicht erforderlich, sondern die Betätigung kann bequem vom Boden 99 (oder einer Plattform, wie einer Offshore-Plattform) aus erfolgen.

In Figur 3 ist eine Detailansicht zu einer alternativen Ausführungsform dargestellt. Sie unterscheidet sich von der in Figur 2 dargestellten Ausführungsform dadurch, dass die Schnalle 60 an der Ratsche 4 angeordnet ist. Der zweite Teil 32 des Zurrgurts 3 kann somit entfallen. Das freie Ende 33 des ersten Teils 31 ist somit unmittelbar durch die an der Ratsche 4 angeordneten Schnalle 60 geführt. Im Übrigen sind Aufbau und Funktionsweise wie bei der zweiteiligen Ausführungsform.

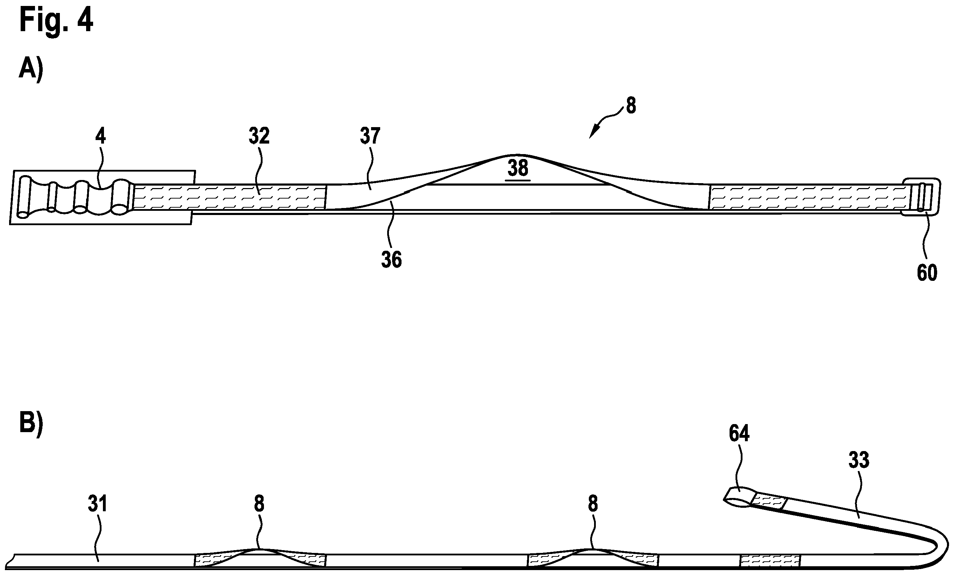

Der Aufbau der zweiteiligen Ausführungsform ist näher in den Figuren 4A und B dargestellt. In Figur 4A ist der als Festende bezeichnete zweite Teil 32 und in Figur 4B der als Losende bezeichnete erste Teil 31 dargestellt. An einem Ende des zweiten Teils 32 ist die Ratsche 4 angeordnet. An dem anderen Ende des zweiten Teils 32 ist die Schnalle 60 angeordnet. Dazwischen befindet sich der eigentliche Zurrgurt.

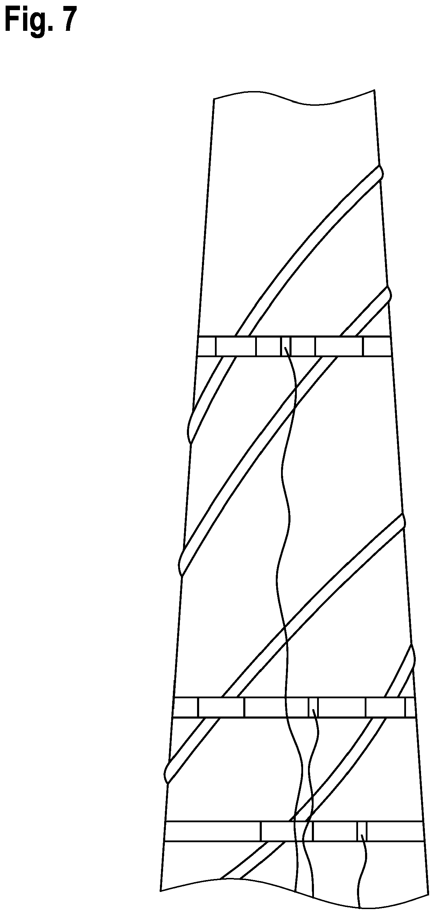

Der Zurrgurt 3 weist in dem dargestellten Ausführungsbeispiel eine Aufnahmeschlaufe 8 auf. Diese ist gebildet durch eine mehrlagige Ausführung des Zurrgurts 3, mit einer unteren Lage 36 und einer aufgenähten oberen Lage 37 (sie kann partiell oder durchgehend aufgebracht sein). Die beiden Lagen 36, 37 sind entlang dem Zurrgurt 3 miteinander vernäht. Dies gilt jedoch nicht in dem Bereich der Aufnahmeschlaufen 8; dort sind die beiden Lagen 36, 37 nicht miteinander vernäht, sondern zwischen ihnen kann ein Freiraum 38 entstehen. Auf diese Weise wird die Aufnahmeschlaufe 8 gebildet. Sie ist so dimensioniert, dass ein aufzunehmender Gegenstand, beispielsweise eine Scruton-Wendel 9 (s. Fig. 7), direkt durch die Aufnahmeschlaufen 8 durchsteckbar ist. Im gespannten Zustand des Zurrgurts 3 kann der Zwischenraum 38 zwischen den beiden Lagen 36, 37 leicht geöffnet werden zum Durchstecken des aufzunehmenden Gegenstands. Beim Spannen des Zurrgurts 3 hingegen bewegen sich unter der Wirkung der den Zurrgurt 3 spannenden Kraft die beiden Lagen 36, 37 aufeinander zu, sodass in der Folge der aufgenommene Gegenstand fest in dem Zwischenraum 38 eingespannt ist. Er ist damit unverrückbar gegenüber dem Zurrgurt 3 positioniert.

Der in Figur 4B dargestellte erste Teil 31 ist im Grunde ähnlich aufgebaut. Er weist dieselbe mehrlagige Struktur zur Bildung einer Aufnahmeschlaufe 8 auf. Zusätzlich ist im Bereich von seinem freien Ende 33 auf der oberen Lage 37 ein Klettverschluss 61 angeordnet. Er umfasst zwei ineinander angeordnete Klett- und Haltebänder 62, 63. Deren Länge ist etwa so bemessen, dass sie etwa ein Viertel der Gesamtlänge des Zurrgurts 3 beträgt. Mindestens ist die Länge so groß, dass sie sich beim Einsatz an dem runden Außenmantel eines Windenergieanlagen-Turms über mindestens ein Sechstel des Umfangs des Turms 10 erstreckt. Es entsteht so bezogen auf die Mittelachse des Turms ein Dreieck mit einem Innenwinkel von mindestens 60°. Das bedeutet, dass die an dem Klettverschluss 61 angreifende Kraft einwärts gerichtet ist, d.h. es tritt eine Selbstsicherung des Klettverschlusses 61 auf. Vorzugsweise ist die Länge so bemessen, dass der Umfang des Turms über mindestens einen Winkelbereich von 90° umfasst wird, wie in Figur 4B dargestellt. Dies sorgt für eine nochmals verbesserte Befestigungssicherheit.

An der unteren Lage 36 ist eine reibungserhöhende Beschichtung vorgesehen, die als Gummierung 35 ausgeführt ist. Unter der Wirkung der im Zurrgurt 3 wirkenden Spannkraft wird das Befestigungsmittel 2 im Einsatz fest gegen den Außenmantel des Windenergieanlagen-Turms 10 gepresst und somit dank der Gummierung 35 unverrückbar gehalten. Diese Gummierung 35 erhöht zum einen die Befestigungssicherheit und Positionstreue des Befestigungsmittels 2 und des damit gehalterten Gegenstands 9. Zum anderen wird damit auch ein Widerlager gebildet, welches ein Abrutschen des Befestigungsmittels 2 unter der Wirkung der Betätigungskraft im Hilfsseil 7 verhindert. Dies sichert ein positives und präzises Auslösen der Schnelltrenneinrichtung 6 bei Bedarf.

Im einsatzbereiten Zustand ist das freie Ende 33 des ersten Teils durch die Schnalle 60 geführt, sodass das freie Ende 33 im Wesentlichen zurückgeschlagen ist (in Figur 4B dargestellt). Dadurch kommen die Abschnitte des Klett- und Hakenbands 62, 63 etwa aufeinander zum Liegen, sodass der Klettverschluss 6 geschlossen ist und eine feste Verbindung mit der Schnalle 60 und mit dem zweiten Teil 32 geschaffen ist. Der Zurrgurt 3 ist damit einsatzbereit. Das Befestigungsmittel 2 kann dann wie üblich verwendet werden: die zu haltenden Gegenstände werden durch die Aufnahmeschlaufen 8 gesteckt und das Befestigungsmittel wird durch Spannen der Ratsche 4 am Einsatzort auf die jeweils benötigte Länge eingestellt und gespannt. Dieser Zustand mit mehreren durch die Befestigungsmittel 1 gehaltenen Scruton-Wendeln 9 am Turm 10 einer Windenergieanlage ist in Figur 7 dargestellt.

Zum vereinfachten Lösen genügt es, an dem Hilfsseil 7 zu ziehen, das an der Aufnahme 64 befestigt ist, um den äußeren Teil des freien Endes 33 wegzuziehen und damit den Klettverschluss 6 zu lösen. Die Spannungskraft im Zurrgurt 3 zieht das freie Ende 33 durch die Schnalle 60 zurück, wodurch der Zurrgurt 3 entspannt wird.

## Patentansprüche

1. Befestigungsmittel für Anbauteile an Windenergieanlagen (1) umfassend einen Zurrgurt (3) und eine Ratsche (4), die eine Spanneinrichtung (5) für den Zurrgurt (3) umfasst,
**dadurch gekennzeichnet, dass**
am Zurrgurt (3) eine gesonderte Schnelltrenneinrichtung (6) vorgesehen ist, die unter Last öffenbar ist, und ferner ein Auslöser für die Schnelltrenneinrichtung (6) vorgesehen ist, der fernbedienbar ist.

2. Befestigungsmittel nach Anspruch 1, **dadurch gekennzeichnet, dass** der Auslöser durch Zug betätigbar ist und ein Ankopplungselement (64) für ein Zugelement (7) aufweist, wobei das Ankopplungselement (64) vorzugsweise integral mit dem Zurrgurt (3) ausgeführt ist, vorzugsweise als Schlaufe.

3. Befestigungsmittel nach Anspruch 2, **dadurch gekennzeichnet, dass** das Zugelement ein Hilfsseil ist.

4. Befestigungsmittel nach einem der Ansprüche 1 bis 3, **dadurch gekennzeichnet, dass** die Schnelltrenneinrichtung (6) als Klettverschluss (61) ausgeführt ist.

5. Befestigungsmittel nach Anspruch 4, **dadurch gekennzeichnet, dass** der Klettverschluss (61) im Bereich eines freien Endes (33) des Zurrgurts (3) angeordnet ist.

6. Befestigungsmittel nach Anspruch 5, **dadurch gekennzeichnet, dass** der Klettverschluss (61) sich über mindestens ein Sechstel der Länge des Zurrgurts (3) erstreckt, vorzugsweise über mindestens ein Fünftel.

7. Befestigungsmittel nach Anspruch 5 oder 6, **dadurch gekennzeichnet, dass** der Klettverschluss (61) ein Klettband (62) und ein Hakenband (63) umfasst, die vorzugsweise hintereinander auf derselben Seite des Zurrgurts (3) angeordnet sind.

8. Befestigungsmittel nach einem der Ansprüche 1 bis 7, **dadurch gekennzeichnet, dass** der Zurrgurt (3) mehrteilig (31, 32) ausgeführt ist mit dazwischen liegender Schnelltrenneinrichtung (6).

9. Befestigungsmittel nach einem der Ansprüche 1 bis 7, **dadurch gekennzeichnet, dass** die Schnelltrenneinrichtung (6) an der Ratsche (4) angeordnet ist.

10. Befestigungsmittel nach einem der Ansprüche 1 bis 9, **dadurch gekennzeichnet, dass** eine im gespannten Zustand nach innen weisende Seite des Zurrgurts (3) mit einer reibungserhöhenden, insbesondere haftreibungserhöhenden, Beschichtung (35) versehen ist.

11. Befestigungsmittel nach einem der Ansprüche 1 bis 10, **dadurch gekennzeichnet, dass** der Zurrgurt (3) mehrere Aufnahmeschlaufen (8) umfasst, die insbesondere zur Aufnahme von Anbaubauteilen wie Streben, Absorber und/oder den Windenergieanlage-Turm umfassende Wendeln (9) ausgeführt sind.

12. Befestigungsmittel nach Anspruch 11, **dadurch gekennzeichnet, dass** die Aufnahmeschlaufen (8) in eine mehrlagige Struktur des Zurrgurts (3) integriert sind.
